# NEW EUROPEAN PATENT SPECIFICATION

(11) **EP 1 614 488 B2**
(45) Date of publication and mention of the opposition decision: **23.01.2019**
(45) Mention of the grant of the patent: 26.03.2014
(21) Application number: 05254179.4
(22) Date of filing: 04.07.2005
(51) Int. Cl.: B22C 9/10, B29C 67/00, B22C 7/00, B29L 31/08

(54) **Casting method using a synthetic model produced by stereolithography**
Giessverfahren mit Verwendung von durch Stereolithographie hergestellte Giesskerne
Méthode de coulée utilisant un modèle produit par stéréolithographie

(30) Priority: 06.07.2004 US 885142
(43) Date of publication of application: 11.01.2006
(73) Proprietor: GENERAL ELECTRIC COMPANY, Schenectady, NY 12345 (US)
(72) Inventor: Wang, Hsin-Pang, Rexford, New York 12148 (US); Lee, Ching Pang, Cincinnati, Ohio 45243 (US)
(74) Representative: Williams, Andrew Richard

(56) References cited:
- EP-A- 0 250 121
- EP-A1- 0 787 547
- FR-A- 2 567 668
- FR-A- 2 654 538
- US-A- 4 575 330
- US-A- 4 844 144
- US-A- 6 051 179
- US-A- 6 068 806
- US-A1- 2003 062 145
- "RAPID MOLD-MAKING FOR INVESTMENT CASTING" MECHANICAL ENGINEERING, ASME. NEW YORK, US, vol. 114, no. 11, 1 November 1992 (1992-11-01), pages 49-51, XP000323196 ISSN: 0025-6501
- ANONYMOUS: "A method of generating casting tooling using negative stereolithographic solid modeling" RESEARCH DISCLOSURE, MASON PUBLICATIONS, HAMPSHIRE, GB, vol. 325, no. 23, May 1991 (1991-05), XP007116350 ISSN: 0374-4353
- TAKASHI NAKAI ET AL: "FABRICATION OF THREE-DIMENSIONAL OBJECTS USING LASER LITHOGRAPHY" SYSTEMS & COMPUTERS IN JAPAN, WILEY, HOBOKEN, NJ, US, vol. 20, no. 3, 1 March 1989 (1989-03-01), pages 58-66, XP000071510 ISSN: 0882-1666
- BEHRENDT U ET AL: "The EOS rapid prototyping concept" COMPUTERS IN INDUSTRY, ELSEVIER SCIENCE PUBLISHERS. AMSTERDAM, NL, vol. 28, no. 1, December 1995 (1995-12), pages 57-61, XP004001195 ISSN: 0166-3615
- PATENT ABSTRACTS OF JAPAN vol. 010, no. 301 (M-525), 14 October 1986 (1986-10-14) -& JP 61 114818 A (FUJITSU LTD), 2 June 1986 (1986-06-02)
- PATENT ABSTRACTS OF JAPAN vol. 010, no. 118 (M-475), 2 May 1986 (1986-05-02) -& JP 60 247515 A (OOSAKAFU), 7 December 1985 (1985-12-07)

## Description

The present invention relates generally to manufacturing processes, and, more specifically, to casting.

Investment casting or the lost-wax process is used for forming complex three dimensional (3-D) components of a suitable material such as metal. An exemplary cast component is the typical turbine rotor blade of gas turbine engine.

A turbine blade includes an airfoil integrally joined at its root with a blade platform below which is integrally joined a multilobed supporting dovetail. The airfoil is hollow and includes one or more radial channels extending along the span thereof that commence inside the blade dovetail which has one or more inlets for receiving pressurized cooling air during operation in the engine.

The airfoil may have various forms of intricate cooling circuits therein for tailoring cooling of the different portions of the opposite pressure and suction sides of the airfoil between the leading and trailing edges thereof and from the root at the platform to the radially outer tip.

Complex cooling circuits include a dedicated channel inside the airfoil along the leading edge for providing internal impingement cooling thereof. A dedicated channel along the thin trailing edge of the airfoil provides dedicated cooling thereof. And, a multi-pass serpentine channel may be disposed in the middle of the airfoil between the leading and trailing edges. The three cooling circuits of the airfoil have corresponding inlets extending through the blade dovetail for separately receiving pressurized cooling air.

The cooling channels inside the airfoil may include local features such as short turbulator ribs or pins for increasing the heat transfer between the heated sidewalls of the airfoil and the internal cooling air. The partitions or bridges which separate the radial channels of the airfoil may include small bypass holes therethrough such as the typical impingement cooling holes extending through the forward bridge of the airfoil for impingement cooling the inside of the leading edge during operation.

Such turbine blades are typically manufactured from high strength, superalloy metal materials in conventional casting processes. In the common investment casting or lost-wax casting process, a precision ceramic core is first manufactured to conform with the intricate cooling passages desired inside the turbine blade. A precision die or mold is also created which defines the precise 3-D external surface of the turbine blade including its airfoil, platform, and integral dovetail.

The ceramic core is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell.

The wax is melted and removed from the shell leaving a corresponding void or space between the ceramic shell and the internal ceramic core. Molten metal is then poured into the shell to fill the void therein and again encapsulate the ceramic core contained in the shell.

The molten metal is cooled and solidifies, and then the external shell and internal core are suitably removed leaving behind the desired metallic turbine blade in which the internal cooling passages are found.

The cast turbine blade may then undergo subsequent manufacturing process such as the drilling of suitable rows of film cooling holes through the sidewalls of the airfoil as desired for providing outlets for the internally channeled cooling air which then forms a protective cooling air film or blanket over the external surface of the airfoil during operation in the gas turbine engine.

Gas turbine engine efficiency is increased typically by increasing the temperature of the hot combustion gases generated during operation from which energy is extracted by the turbine blades. The turbine blades are formed of superalloy metals, such as nickel based superalloys, for their enhanced strength at high temperature to increase the durability and useful life of the turbine blades.

The intricate cooling circuits provided inside the airfoils are instrumental in protecting the blades from the hot combustion gases for the desired long life of the blades in an operating turbine engine.

The cooling circuits inside turbine blades are becoming more and more complex and intricate for tailoring the use of the limited pressurized cooling air and maximizing the cooling effectiveness thereof. Any such cooling air bled from the compressor during operation for cooling the turbine blades is not used in the combustion process and correspondingly decreases the overall efficiency of the engine.

Recent developments in improving turbine airfoil cooling include the introduction of double walls therein for enhancing local cooling of the airfoil where desired. The typical airfoil includes main channels such as the dedicated leading edge and trailing edge channels and the multi-pass serpentine channels that provide the primary cooling of the airfoil. These channels are typically defined between the thin pressure and suction sidewalls of the airfoil which may be about 40 to 50 mils thick.

In introducing double wall construction of the airfoil, a thin internal wall is provided between the main sidewalls of the airfoil and the main channels therein to define auxiliary or secondary channels which are relatively narrow. The secondary wall may include impingement holes therethrough for channeling from the main flow channels impingement cooling air against the inner surface of the main sidewalls.

The introduction of the double wall construction and the narrow secondary flow channels adds to the complexity of the already complex ceramic cores used in typical investment casting of turbine blades. Since the ceramic core identically matches the various internal voids in the airfoil which represent the various cooling channels and features thereof, it becomes correspondingly more complex as the cooling circuit increases in complexity.

Each radial channel of the airfoil requires a corresponding radial leg in the ceramic core, and the legs must be suitably interconnected or otherwise supported inside the two dies during the casting process. As the ceramic core legs become thinner, such as for the secondary channels, their strength correspondingly decreases which leads to a reduction in useful yield during the manufacture of the cores that are subject to brittle failure during handling.

Since the ceramic cores are separately manufactured and then assembled inside the two die halves, the relative positioning thereof is subject to corresponding assembly tolerances. The walls of the airfoil are relatively thin to begin with, and the features of the ceramic core are also small and precise. Therefore, the relative position of the ceramic core inside the die halves is subject to assembly tolerances which affect the final dimensions and relative position of the intricate cooling circuit inside the thin walls of the resulting airfoil.

US 4,844,144 discloses investment casting utilizing patterns produced by stereolithography.

"Rapid mold-making for investment casting" Mechanical Engineering, ASME. New York, US, Vol. 114, no. 11, 1 Nov. 1992, pp. 49-51, XP000323196, ISSN 0025-6501 describes a method for producing complex ceramic molds for investment casting of metal parts.

Accordingly, it is desired to provide an improved casting method for 3-D components having intricate internal voids.

According to the present invention as defined in claim 1, a casting method comprises creating a synthetic model of a component created from a 3-D numerical model thereof. A core is then cast inside the synthetic model. The synthetic model may then be removed from the cast core, and then the cast core is used for casting an authentic component therearound. The core is removed from inside the authentic component, which authentic component precisely matches the original synthetic model therefor.

The invention, in accordance with preferred and exemplary embodiments, together with further objects and advantages thereof, is more particularly described in the following detailed description taken in conjunction with the accompanying drawings in which:
Figure 1 is a schematic representation of exemplary method for creating a 3-D numerical model of a hollow turbine blade and a corresponding synthetic model thereof.
Figure 2 is a radial sectional view through the airfoil portion of the actual component and synthetic model illustrated in Figure 1 and taken along line 2-2.
Figure 3 is an isometric view of the synthetic model illustrated in Figure 1 being encapsulated in a pair of supporting buttresses.
Figure 4 is a partly sectional, elevational view of the synthetic model illustrated in Figure 3 encapsulated by the two buttresses and being injected with a ceramic material to fill the internal voids of the synthetic model.
Figure 5 is a schematic representation of the synthetic model illustrated in Figure 4 after removal of the two buttresses and undergoing a coating process to form a ceramic shell therearound.
Figure 6 is a schematic view of the shell-encapsulated synthetic model illustrated in Figure 5 in which the synthetic model is removed for casting the authentic blade between the shell and core, after which the shell and core are removed to liberate the cast authentic blade.

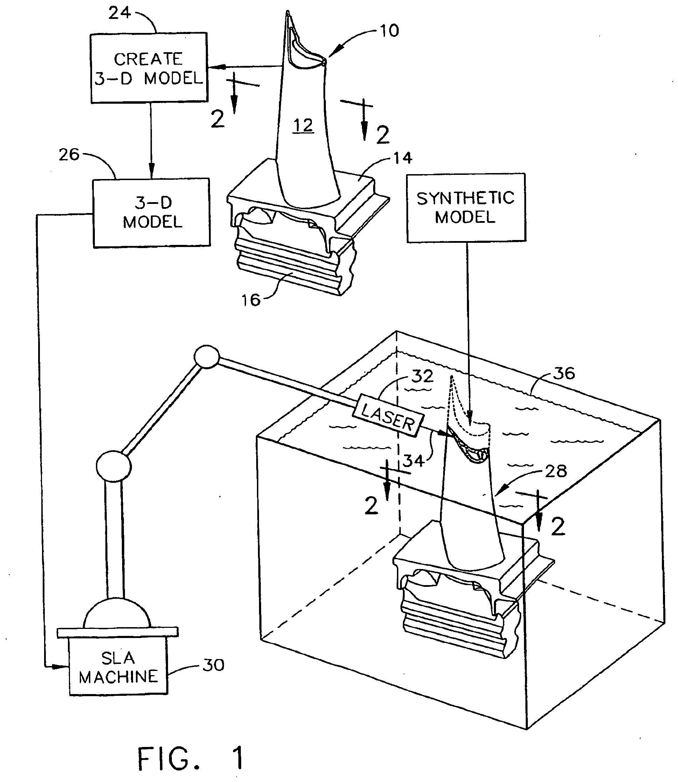

Illustrated in Figure 1 is a component 10 for being replicated by casting. The component may have any suitable configuration for casting, and is in the exemplary embodiment of a turbine rotor blade for a gas turbine engine.

The exemplary turbine blade 10 includes an airfoil 12 having a generally concave pressure side and an opposite generally convex suction side extending in chord between opposite leading and trailing edges, and extending in radial span between a root and an outer tip.

The airfoil is integrally joined to a platform 14 at the root thereof which defines the inner boundary for the hot combustion gases which pass over the airfoil during operation in the engine. A multilobe mounting dovetail 16 is integrally formed below the platform for mounting the blade in a corresponding dovetail slot in the perimeter of a turbine rotor disk (not shown).

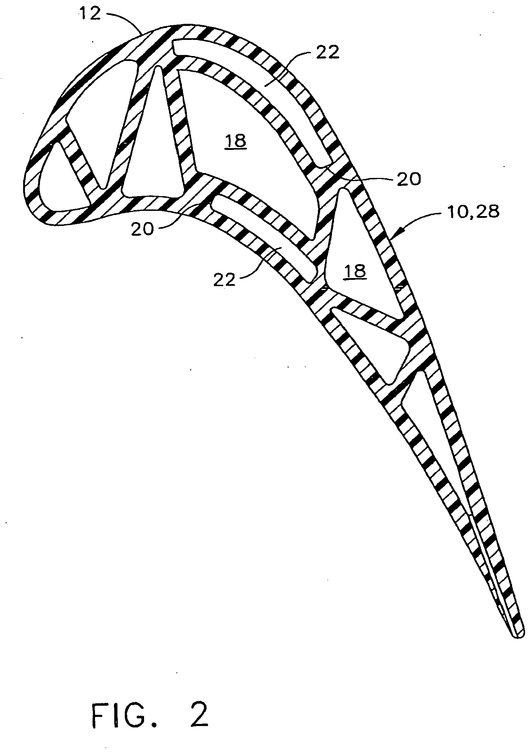

The turbine blade illustrated in Figure 1 has a complex 3-D configuration and external profile as required for its proper use in the gas turbine engine. As illustrated in section in Figure 2, the airfoil is hollow and includes a suitable internal cooling circuit having multiple radial main channels 18 therein. The main channels are defined between the opposite thin sidewalls of the airfoil and extend over the full span thereof, within inlets extending through the platform and dovetail for receiving pressurized cooling air therethrough in operation in the engine.

In the exemplary embodiment illustrated in Figure 2, the airfoil includes in part a double wall 20 along both the pressure and suction sides thereof in which is formed a relatively thin or narrow secondary channel 22 that extends along the radial span of the airfoil. The double wall construction includes the main pressure sidewall or suction sidewall in combination with a thin parallel inner wall which bounds the main channel 18. The inner wall is spaced closely adjacent to the outer wall to define the narrow secondary channel 22 therebetween, and the inner wall includes rows of impingement holes in flow communication between the channels for providing impingement cooling of the internal surface of the outer wall during operation.

As indicated above, conventional investment casting requires the fabrication of a ceramic core that corresponds with the various channels illustrated in Figure 2. The main channels 18 are relatively large in size and would result in relatively strong ceramic legs.

However, the secondary channels 22 are relatively narrow and would result in relatively thin ceramic legs which are correspondingly weaker than the main legs. And, the complexity of the multiple main channels and exemplary two secondary channels illustrated in Figure 2 require the special manufacture of the ceramic core and the multiple legs thereof typically in multiple components which must be later suitably joined together for use in conventional investment casting.

An improved casting method is disclosed hereinbelow which can easily and accurately form the required ceramic core for the multiple channels illustrated in Figure 2 irrespective of their configurations and relative sizes, including the narrow secondary channels 22 as well.

More specifically, the turbine blade 10 illustrated in Figure 1 may be designed and defined in any conventional manner including computer aided design (CAD) representations thereof using suitable software programmed into a conventional digital computer 24. It is now common practice in the industry to create 3-D definitions or models of highly complex parts, such as the turbine blade, represented by the three dimensional coordinates of the entire configuration of the component, including external and internal surfaces thereof.

Accordingly, the turbine blade 10 illustrated in Figure 1 may be conventionally represented by its 3-D numerical model 26 which includes the precise definition of its entire external surface including the airfoil 12, platform 14, and dovetail 16, as well as its internal surface as represented by the various channels 18,22 illustrated in Figure 2.

In conventional practice, the 3-D model 26 of the turbine blade 10 would be used for creating a conventional ceramic core and complementary external dies (not shown) which would be used for investment casting thereof. However, as indicated above the introduction of the double wall construction inside the airfoil and the narrow secondary channels 22 increases the complexity and cost for conventional investment casting of the blade, while also having reduced yield due to the fragile nature of the thin ceramic legs required to define the secondary channels 22.

In an improved casting process or method, the conventionally created 3-D model 26 of the turbine blade 10 is used to create a 3-D synthetic model 28 of the hollow blade 10.

For example, Figure 1 illustrates schematically a stereolithography apparatus (SLA) or machine 30 for creating the synthetic model 28 to identically match the authentic or genuine turbine blade 10 being manufactured. The SLA machine 30 may have any conventional configuration and typically includes a laser 32 mounted at the end of a robotic arm which is suitably controlled and positioned in 3-D space by the numerical controller of the machine that is digitally programmable for controlling the various functions thereof.

A suitable SLA material 36, such as a liquid resin, is contained in a pool, and a laser beam 34 is emitted from the laser 32 to locally cure the resin in the pool to create or build the synthetic model 28 therein. The synthetic model is supported on a suitable fixture in the pool and is built layer by layer as the laser beam is precisely guided over the full configuration of the model following the 3-D model 26 stored in the machine 30.

The same numerical model 26 of the authentic turbine blade 20 is used for creating the substantially identical synthetic model 28 in the SLA machine 30, with the resulting two blades being identical to each other except for material composition. The authentic blade 10 illustrated in Figure 1 is formed of a suitable superalloy metal for the typical gas turbine engine application, whereas the synthetic model 28 of that blade is formed of the suitable SLA material 36 which is cured to solid form by the laser 32.

Figure 2 illustrates the same radial sectional view for the authentic blade 10 illustrated in Figure 1 as well as for the synthetic model blade 28 illustrated in Figure 1, with the former being formed of the superalloy metal and the latter being formed of the synthetic SLA material.

The synthetic model 28 illustrated in Figure 1 is defined by the solid SLA material and includes the precision external configuration and surfaces for the entire blade, as well as the precise internal cooling circuit therein including the main and secondary flow channels 18,22 as illustrated in Figure 2. The precision of definition of the synthetic model 28 may vary as desired for reproducing the various features of the authentic blade with suitable accuracy.

More accuracy in the synthetic model 28 requires more data points in the numerical model 26 which is limited only by the practical use of the model in controlling the SLA machine 30. The individual synthetic model 28 should be formed as quickly as practical for increasing productivity of the overall casting process which requires a considerable number of turbine blade to be manufactured for each gas turbine engine, as well as for multiple engines in practical production runs.

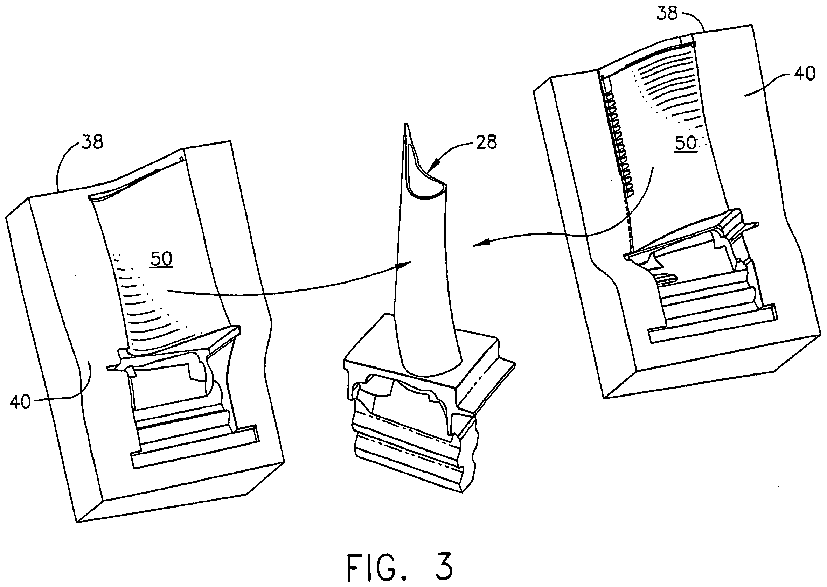

The 3-D synthetic model 28 is illustrated in Figure 3 following the fabrication thereof in the SLA machine. Since the SLA material 30 is a low strength non-metallic material, lacking the strength of metal, the synthetic model is buttressed or encapsulated for providing a support or backing structure around the external surface thereof.

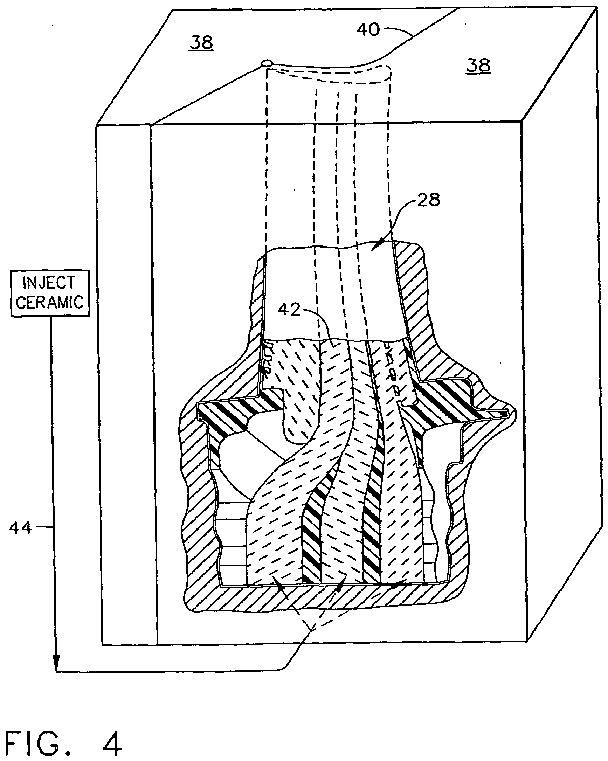

For example, the synthetic model 28 may be buttressed by a pair of complementary backing members or buttresses 38 which encapsulate the synthetic model along a longitudinal splitline 40 as illustrated in Figure 4. The two buttresses 38 preferably fully encapsulate the synthetic model 28 along its external surface substantially in full, except as required for small inlets and outlets for the subsequent casting process.

The two buttresses 38 are suitably bolted or clamped together around the synthetic model and then a ceramic core 42 may be suitably cast inside the hollow synthetic model to fill the various voids originally provided therein.

The core may be cast by injecting under pressure a suitable core material 44 into the buttressed synthetic model 28 which injected core is then suitably cured by drying and heating for example.

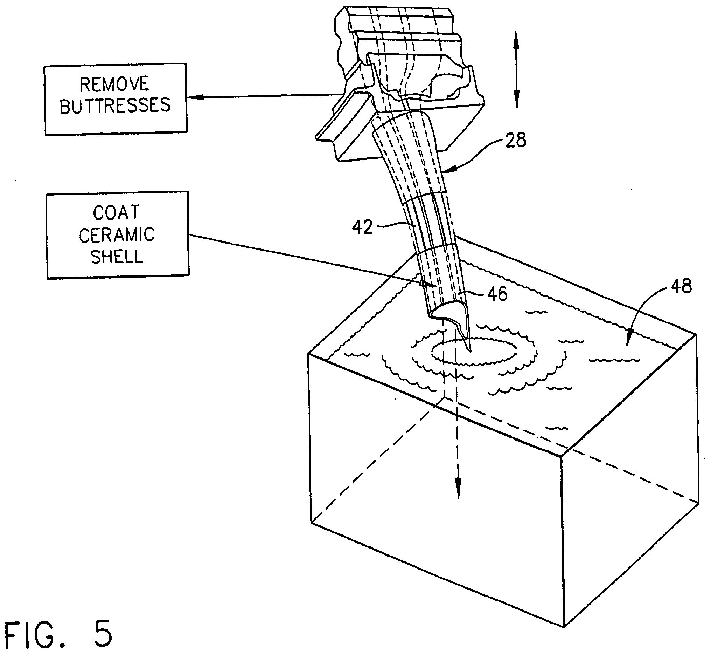

Figure 5 illustrates schematically that the two buttresses may be suitably removed from the synthetic model 28 after the internal core 42 is formed therein. As indicated above, the two buttresses 38 provide a structural support for the relatively weak synthetic model 28 so that under the injection process for forming the internal core the weak SLA material is not permitted to deform or bulge and distort the desired dimensions thereof.

As shown in Figure 5, a molding shell 46 may then be formed around the synthetic model 28 after the internal core 42 is cast therein and the external surface of the model becomes exposed without obstruction by the buttresses.

For example, the synthetic model 28 illustrated in Figure 5 may be dipped in a pool of coating material 48 for coating the model in multiple layers to form the subsequent shell 46 therearound upon curing thereof. The entire synthetic model 28 may be coated layer by layer until a sufficient thickness of the shell 46 is obtained.

In the preferred embodiment illustrated in Figure 5, the core material 44 is a ceramic slurry suitably injected into the synthetic model 28 to form the ceramic core 42. And, the shell material 48 is also a ceramic slurry for coating the synthetic model 28 to form the encapsulating shell 46 in a unitary configuration.

The ceramic material for both the core 42 and the shell 46 may then be suitably cured by drying and heating to solidify the ceramic material in place.

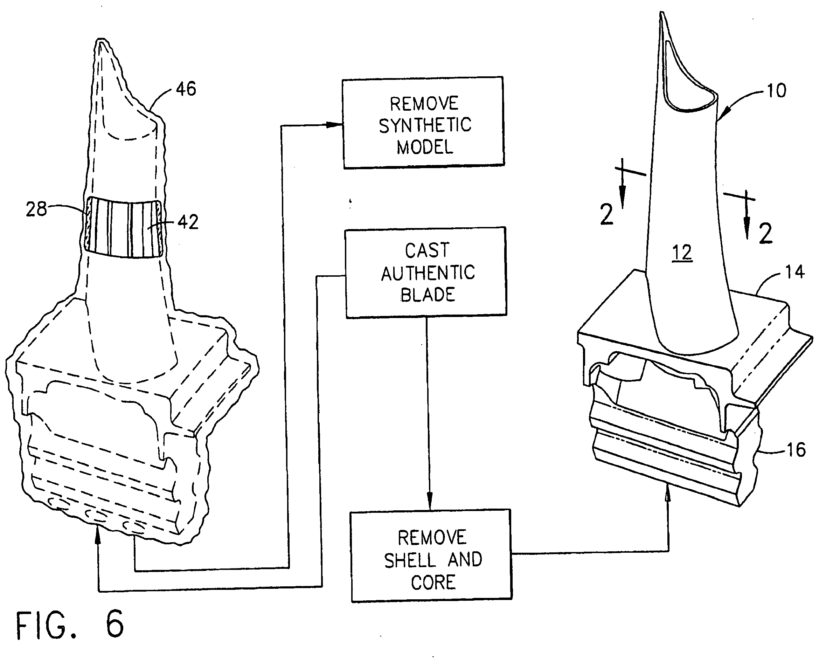

Figure 6 illustrates schematically that the synthetic model 28 may be suitably removed from around the ceramic core 42 and from inside the surrounding ceramic shell 46 by melting, burning, dissolving, or any other suitable means for removing the specific form of the SLA material forming the synthetic model. This may be conveniently effected by providing access holes at the base of the encapsulated model 28 which are aligned with the corresponding inlet legs of the ceramic core.

Upon removal of the synthetic model from the shell 46 illustrated in Figure 6, a corresponding void remains therein surrounding the ceramic core 42 trapped inside the shell. That void corresponds with the precise definition of the metal portions which define the authentic blade 10.

Accordingly, the authentic blade 10 may then be conventionally cast around the core 42 and inside the shell 46 in the same process steps used in the conventional investment casting after removal of the pattern wax. For example, molten metal may be poured through the access holes at the dovetail end of shell 46 to fill by gravity the void inside the shell, which is suitably fixtured in the upside down position. The tip end of the shell 46 may have a suitable outlet aperture for purging air from the shell as the molten material fills the void therein.

The molten material is then allowed to cool and solidify inside the ceramic shell 46 and around the ceramic core 42 to create the authentic blade 10. The shell 46 may then be suitably removed from around the cast blade 10 by breaking or dissolving the brittle ceramic material thereof. Correspondingly, the ceramic core 42 may be suitably removed from inside the cast blade 10 in any conventional manner such as by chemical leaching. In this way, the cast blade 10 is liberated from the encapsulating outer shell 46, and the internal core 42 is removed to form the internal cooling circuit therein.

The so cast blade may then undergo typical post-casting processes, such as drilling of various rows of film cooling holes through the sidewalls thereof.

A particular advantage of using the synthetic model 28 illustrated in Figure 4 is that the interconnected main channels 18 and secondary channels 22 may be filled in turn by injecting therein the ceramic material 44 to form an integral or unitary ceramic core 42 after curing thereof. All the voids within the entire synthetic model 28 may be readily filled with the ceramic material to accurately form the resulting core which is also accurately positioned within the synthetic model 28 itself.

Correspondingly, after removal of the synthetic model 28 from within the surrounding ceramic shell 46 as illustrated in Figure 6 the resulting void around the core precisely represents the configuration of the final metallic turbine blade in its authentic or genuine form. Casting the molten material in the shell 46 reproduces identically the synthetic model previously contained therein, with the authentic blade being formed of the intended final material in contrast with the different SLA material of the synthetic model.

Accordingly, the resulting authentic turbine blade 10 illustrated in Figure 6 accurately replicates the synthetic model 28 itself as well as the original numerical model 26 illustrated in Figure 1 within the tolerances of that original numerical model. The outer configuration of the turbine blade 10 illustrated in Figure 6 including the airfoil 12, platform 14, and integral dovetail 16 accurately reproduces the numerical model. And, the internal cooling circuit within the cast turbine blade 10 also accurately reproduces the corresponding circuit represented by the numerical model.

Since the ceramic core 42 is itself molded within the synthetic model 28 its position relative thereto is accurately maintained by the cured SLA material itself. And, the outer configuration of the synthetic model 28 is accurately molded in the encapsulating shell 46. In this way, the ceramic core 42 is accurately positioned inside the ceramic shell 46 for accurately reproducing the corresponding wall thickness in the finally cast blade between the internal and external surfaces thereof.

It is noted that the authentic blade 10 illustrated in Figure 6 is cast using the ceramic core 42 inside the ceramic shell 46 without for the need for conventional dies typically used in the lost-wax casting process. Figure 3 illustrates the use of the buttresses 38 which are specifically configured to support or back the relatively weak synthetic model 28, and are generally in the form of conventional dies, but do not provide their die function.

More specifically, conventional dies must be formed of suitably strong metal and accurately machined to form the complementary external surfaces of the blade being cast. The conventional dies are repeatedly used in the lost-wax casting process during the intermediate step in which the wax is cast between the core and the dies to precisely form the wax equivalent of the final component or blade.

In contrast, the pre-formed synthetic model 28 illustrated in Figure 3 accurately represents the final form of the authentic blade within the manufacturing tolerances of the numerical model 26 illustrated in Figure 1. No wax is used in the present casting process, and therefore conventional dies for such wax are not required.

The synthetic model 28 illustrated in Figure 3 includes an external surface including the aerodynamic airfoil portion attached to the platform inner boundary supported on the integral dovetail. The external surface of the synthetic model has a first tolerance on dimensions thereof within the desired precision of the numerical model 26 illustrated in Figure 1. Typically, the external dimensions of the synthetic model 28 and the subsequent authentic blade 10 are specified with a manufacturing tolerance of a few mils or less, with the airfoil portion of the blade being particularly accurate in dimension, configuration, and smooth surface finish.

However, since the buttresses 38 illustrated in Figure 3 merely provide backing support for the synthetic model during injection under pressure of the ceramic material, they do not require comparable accuracy of manufacture, nor the associated expense thereof. The two complementary buttresses 38 illustrated in Figure 3 have corresponding internal surfaces 50 which are complementary with the corresponding external surfaces of the synthetic model 28 on its opposite sides.

The splitline 40 may be conveniently located along the camber line of the airfoil and radiates outwardly from the leading and trailing edges thereof. In this way, one of the buttresses may be configured for the concave pressure side of the airfoil and corresponding side of the platform and dovetail, with the other buttress being configured for the convex suction side of the airfoil and corresponding side of the platform and dovetail.

The two buttresses 38 may be formed of a suitable metal for sufficient strength, and the internal surfaces 50 may be machined with a second tolerance on dimensions thereof which can be substantially larger or greater than the first tolerance on dimensions of the synthetic model 28 itself. It is not required that the internal surfaces 50 of the buttresses identically match the corresponding external surfaces of the synthetic model 28, but only generally match those surfaces to sufficiently restrain distortion thereof during the core casting process.

In this way, the buttresses may be formed of less expensive material than conventional metallic dies, and may be machined with less accuracy for significantly reducing the cost thereof, and therefore reducing the cost of casting authentic blades.

Figure 1 illustrates the exemplary SLA process of forming the synthetic model 28. Any other conventional process for accurately forming the synthetic model may also be used in which both the internal voids and external surfaces are accurately reproduced for use in the casting process described above.

The turbine blade form of the cast component is a particular example due to the inherent complexity thereof, and the corresponding benefits in improving the accuracy of casting of the blades at reduced cost. Other forms of the component may also be cast to accurately reproduce their external configuration and surfaces, and any desired internal voids or surfaces therein.

## Claims

1. A casting method comprising:
creating a 3-D numerical model (26) of a turbine blade (10);
creating a synthetic model (28) of said blade from said numerical model (26) by stereolithography in which a laser beam (34) is guided in 3-D space to locally cure a material (36) over the boundary of said numerical model;
buttressing said synthetic model (28) prior to casting a core (42) therein;
injecting core material (44) into said buttressed synthetic model (28) to cast said core (42) therein;
forming a shell (46) around said synthetic model (28) after casting said core (42) therein;
removing said synthetic model (28) from around said core (42) and from inside said shell (46);
casting said authentic blade (10) around said core (42) and inside said shell (46); and
removing said shell (46) from around said cast authentic blade, and removing said core (42) from inside said blade.

2. A method according to claim 1 further comprising buttressing said synthetic model (28) along an external surface thereof substantially in full.

3. A method according to claim 2 further comprising coating said synthetic model (28) with a coating material (48) to form said shell (46) therearound.

4. A method according to claim 3 wherein:
said core material (44) is a ceramic slurry injected into said synthetic model (28); and
said shell material (48) is a ceramic slurry coating said synthetic model (28).

5. A method according to claim 4 wherein said synthetic model (28) is buttressed by a pair of complementary buttresses (38) encapsulating said synthetic model (28) along a longitudinal splitline (40).

6. A method according to claim 5 wherein:
said synthetic model (28) includes an external surface having a first tolerance on dimensions thereof; and
said buttresses (38) include internal surfaces (50) being complementary with said model external surface on opposite sides thereof, and said internal surfaces (50) have a second tolerance on dimensions greater than said first tolerance.

7. A method according to claim 6 wherein:
said synthetic model (28) includes a hollow airfoil (12) having main channels extending in span therethrough, and a double wall (20) along one of said main channels having a secondary channel (22) in flow communication with an adjacent main channel; and
said core material (42) is injected into said main channels (18) and in turn into said secondary channel (22) to form an integral core.

## Patentansprüche

1. Gießverfahren, das umfasst:
Erstellen eines numerischen 3-D-Modells (26) einer Turbinenschaufel (10);
Erstellen eines synthetischen Modells (28) der Schaufel anhand des numerischen Modells (26) mittels Stereolithografie, bei der ein Laserstrahl (34) im 3-D-Raum geführt wird, um lokal ein Material (36) über die Grenzfläche des numerischen Modells zu härten;
Stützen des synthetischen Modells (28), bevor darin ein Kern (42) eingegossen wird;
Einspritzen von Kernmaterial (44) in das gestützte synthetische Modell (28), um darin einen Kern (42) einzugießen;
Bilden einer Schale (46) um das synthetische Modell (28), nachdem der Kern (42) darin eingegossen wurde;
Entfernen des synthetischen Modells (28) um den Kern (42) herum und aus der Hülle (46) heraus;
Gießen der echten Schaufel (10) um den Kern (42) herum und innerhalb der Schale (46); und
Entfernen der Hülle (46) um die gegossene echte Schaufel und Entfernen des Kerns (42) von innerhalb der Schaufel.

2. Verfahren nach Anspruch 1, das weiter ein im Wesentlichen vollständiges Stützen des synthetischen Modells (28) entlang einer äußeren Oberfläche davon umfasst.

3. Verfahren nach Anspruch 2, das weiter ein Beschichten des synthetischen Modells (28) mit einem Beschichtungsmaterial (48) umfasst, um die Schale (46) darum herum zu bilden.

4. Verfahren nach Anspruch 3, wobei:
das Kernmaterial (44) ein Keramikschlicker ist, der in das synthetische Modell (28) eingespritzt wird; und
das Schalenmaterial (48) ein Keramikschlicker ist, der das synthetische Modell (28) beschichtet.

5. Verfahren nach Anspruch 4, wobei das synthetische Modell (28) durch ein Paar von komplementären Stützen (38) gestützt wird, die das synthetische Modell (28) entlang einer Längsteilungslinie einkapseln (40).

6. Verfahren nach Anspruch 5, wobei:
das synthetische Modell (28) eine äußere Oberfläche enthält, die eine erste Toleranz hinsichtlich ihrer Abmessungen aufweist; und
die Stützen (38) innere Oberflächen (50) enthalten, die komplementär zu der äußeren Oberfläche des Modells auf gegenüberliegenden Seiten davon sind, und die inneren Oberflächen (50) eine zweite Toleranz hinsichtlich Abmessungen aufweisen, die größer ist als die erste Toleranz.

7. Verfahren nach Anspruch 6, wobei:
das synthetische Modell (28) eine hohle Tragfläche (12), die Hauptkanäle aufweist, die sich durch eine Spannweite der Tragfläche erstrecken, und eine Doppelwand (20) entlang einer der Hauptkanäle enthält, die einen Sekundärkanal (22) mit einem benachbarten Hauptkanal fluidverbunden hält; und
das Kernmaterial (42) in die Hauptkanäle (18) und wiederum in den Sekundärkanal (22) eingespritzt wird, um einen ganzheitlichen Kern zu bilden.

## Revendications

1. Procédé de coulée comprenant les étapes consistant à :
créer un modèle numérique tridimensionnel (26) d'une aube de turbine (10) ;
créer un modèle de synthèse (28) de ladite aube à partir dudit modèle numérique (26) par stéréolithographie, où un faisceau laser (34) est guidé dans l'espace tridimensionnel pour durcir localement un matériau (36) sur la limite dudit modèle numérique ;
étayer ledit modèle de synthèse (28) avant d'y couler un noyau (42) ;
injecter un matériau de noyau (44) dans ledit modèle de synthèse étayé (28) pour y couler ledit noyau (42) ;
former une coque (46) autour dudit modèle de synthèse (28) après y avoir coulé ledit noyau (42) ;
retirer ledit modèle de synthèse (28) du pourtour dudit noyau (42) et de l'intérieur de ladite coque (46) ;
couler ladite aube réelle (10) autour dudit noyau (42) et à l'intérieur de ladite coque (46) ; et
retirer ladite coque (46) du pourtour de ladite aube réelle coulée et retirer ledit noyau (42) de l'intérieur de ladite aube.

2. Procédé selon la revendication 1, comprenant en outre l'étape visant à étayer ledit modèle de synthèse (28) le long de sa surface externe sensiblement en entier.

3. Procédé selon la revendication 2, comprenant en outre l'étape visant à revêtir ledit modèle de synthèse (28) par un matériau de revêtement (48) pour former ladite coque (46) autour de celui-ci.

4. Procédé selon la revendication 3, dans lequel :
ledit matériau de noyau (44) est une suspension de céramique injectée dans ledit modèle de synthèse (28) ; et
ledit matériau de coque (48) est une suspension de céramique revêtant ledit modèle de synthèse (28).

5. Procédé selon la revendication 4, dans lequel ledit modèle de synthèse (28) est étayé par une paire de butées complémentaires (38) encapsulant ledit modèle de synthèse (28) le long d'une ligne de séparation longitudinale (40).

6. Procédé selon la revendication 5, dans lequel :
ledit modèle de synthèse (28) comprend une surface externe ayant une première tolérance dimensionnelle ; et
lesdites butées (38) comprennent des surfaces internes (50) complémentaires de ladite surface externe du modèle sur ses côtés opposés, et lesdites surfaces internes (50) ont une seconde tolérance dimensionnelle supérieure à ladite première tolérance.

7. Procédé selon la revendication 6, dans lequel :
ledit modèle de synthèse (28) comprend un profil aérodynamique creux (12) ayant des canaux principaux dont la portée couvre celui-ci, et une double paroi (20) le long de l'un desdits canaux principaux ayant un canal secondaire (22) en communication de fluide avec un canal principal adjacent ; et
ledit matériau de noyau (42) est injecté dans lesdits canaux principaux (18) et ensuite dans ledit canal secondaire (22) pour former un noyau d'une seule pièce.
